# EUROPEAN PATENT SPECIFICATION

(11) **EP 3 095 332 B1**
(45) Date of publication and mention of the grant of the patent: **17.10.2018**
(21) Application number: 16169554.9
(22) Date of filing: 13.05.2016
(51) Int. Cl.: A23G 9/08, A23G 9/12, A23G 9/28, A23G 9/30, A23G 9/22

(54) **METHOD FOR MAKING ICE CREAM**
VERFAHREN ZUR HERSTELLUNG VON SPEISEEIS
PROCÉDÉ POUR CONFECTIONNER UNE CRÈME GLACÉE

(30) Priority: 18.05.2015 IT UB20150731
(43) Date of publication of application: 23.11.2016
(73) Proprietor: ALI GROUP S.r.l. - CARPIGIANI, 20063 Cernusco Sul Naviglio (MI) (IT)
(72) Inventor: COCCHI, Andrea, 40012 Calderara di Reno (Bologna) (IT); LAZZARINI, Roberto, 42100 Reggio Emilia (IT)
(74) Representative: Milli, Simone

(56) References cited:
- EP-A1- 2 491 792
- EP-A1- 2 578 086
- EP-A1- 2 755 496
- EP-A1- 2 856 888
- EP-A2- 2 082 649
- GB-A- 623 699
- JP-A- 2000 093 090
- "Aging the mix" In: W. S. Arbuckle: "Ice Cream, Fourth Edition", 1 January 1986 (1986-01-01), The AVI Publishing Company, Westport, Connecticut, XP002749945, ISBN: 0-87055-479-4 pages 212-215, * page 213 - page 215 *

## Description

This invention relates to a method for making ice cream.

As is known, food safety and hygiene in the food industry in question are particularly important issues.

More specifically, ubiquitous invasive infectious agents such as Salmonella and Listeria monocytogenes are becoming increasingly common in the industry in question.

The Listeria monocytogenes bacterium, in particular, proliferates even at low temperatures and with limited nutritional levels and spreads rapidly by cross-contamination.

A typical example of this context is the process for producing ice cream and the machines used for processing ice cream.

For example JP2000093090A discloses a method for making ice cream in a machine comprising a processing chamber (15) provided with a mixer and a refrigerating circuit (6-8) and a separate electrical heater (26) for cooling and heating, respectively, the processing chamber. The ice cream ingredients are mixed and pasteurised in the processing chamber, which is heated by the heater until the ice cream mix reaches a pasteurisation temperature of 70-80 °C. The pasteurised mix is then cooled by the refrigerating circuit (at -20 °C) to obtain ice cream. It has also been found that each time the basic mixture comes into contact with any external item (containers, serving utensils), the risk of product contamination increases, which, in effect, means that the overall food safety of the ice cream making process is reduced.

This has given rise to the need to improve food safety in order to provide ice cream which is particularly safe, and which does not have any residual food risk for consumers.

Elimination of the food risk, or at least its drastic reduction to levels which do not represent a problem for someone who eats the ice cream, is a need felt by everyone involved in the trade: from manufacturers of semi-finished food products and related processing machines down to individual ice-cream vendors.

In this context, it is therefore essential to increase the food safety of the ice cream making process and to provide an operating method which is inherently safe, that is, which allows the potential risks of contamination to be eliminated independently of factors external to the preparation performed on the machine, thus guaranteeing a safe end product.

The aim of this invention is to provide a method for making ice cream which allows the above mentioned needs to be met.

The aim of this invention is also to provide a method for making ice cream which allows the potential risks of contamination of the product to be reduced without introducing further processing and, therefore, further operations on the food product and without extending the processing times.

Another aim of the invention is to provide a method for making ice cream which simplifies operations, reducing the handling of the ingredients.

A further aim of this invention is to provide a method for making ice cream which can be performed in tight spaces.

According to the invention, this aim is achieved by a method for making ice cream as defined in claim 1.

The technical features of the invention, with reference to the above aims, are clearly described in the claims below and its advantages are apparent from the detailed description which follows, with reference to the single accompanying drawing which illustrates a preferred, non-limiting example embodiment of the invention, and in which:
- Figure 1 is a schematic view of a first embodiment of a machine in which the method of this invention is implemented;
- Figure 2 is a schematic view of a second embodiment of a machine in which the method of the invention is implemented;
- Figure 3 schematically illustrates the making of ice cream in accordance with the method of the invention.

With reference to the accompanying drawings, the numeral 1 denotes a machine for making ice cream, designed to make ice cream (preferably artisan gelato) with the method according to this invention.

In the context of the invention, the term "ice cream" is used to mean a food preparation which is based on sugars, milk and milk-derived products and cream and to which fruit, aromatics or other ingredients are added to obtain different flavours.

The invention also relates to a method for making ice cream.

It should be noted that the processing method is a batch processing method.

The method comprises a step of preparing a machine 1 for the mixing and cooling of ice cream and equipped with:
- a processing container 2 defining a processing chamber 3 and provided with a stirrer 5 rotating inside the processing chamber 3;
- a thermal treatment system, configured to be activated, selectively and alternatively, in heating or cooling mode, for heating and cooling the processing chamber 3, respectively.

The thermal treatment system is a thermodynamic system, that is, a system operating according to a thermodynamic cycle.

The thermal treatment system comprises a compressor.

Further, the thermal treatment system comprises at least one heat exchanger, connected to the processing chamber 3.

Further, according to the invention, the method comprises the following steps:
- placing a basic ice cream mixture inside the processing chamber 3;
- activating the thermal treatment system in heating mode for a predetermined time for heating the basic mixture inside the processing chamber 3, such as to subject the basic mixture to a thermal treatment (pasteurization) inside the processing chamber 3 so as to deactivate any infectious agents which may be present;
- activating the thermal treatment system in cooling mode for cooling the basic mixture inside the processing chamber 3 and, at the same time, rotating the rotary stirrer 5, so as to allow incorporating air into the basic mixture to make an ice cream type product in the processing chamber 3;
- keeping the basic mixture previously subjected to the thermal treatment (pasteurization) inside the processing chamber 3 between the step of activating the thermal treatment system in heating mode for a predetermined time and the step of activating the thermal treatment system in cooling mode;
- extracting at least one portion of the ice cream type product from the processing chamber 3.

It should be noted that, according to the invention, the method comprises making ice cream according to a "batch" process, that is, in batches: in effect, a predetermined quantity of basic mixture is loaded and all of it is transformed into ice cream (without, in the meanwhile, adding more basic mixture).

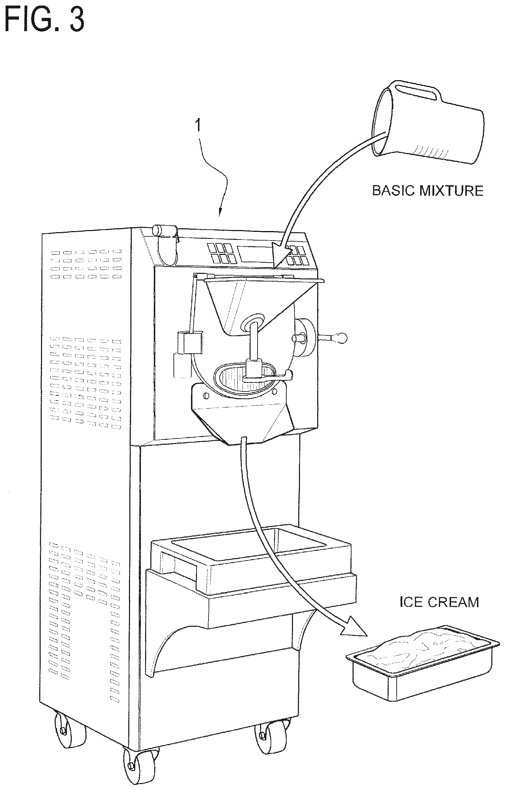

Preferably, the machine 1 comprises a hopper for feeding the basic mixture (as illustrated in Figure 3) in the processing chamber 3. Preferably, the basic mixture comprises milk.

Preferably, the basic mixture also comprises sugar.

It should be noted that the mixing and cooling machine is a batch freezing unit.

According to another aspect, the step of activating the thermal treatment system in cooling mode for cooling the basic mixture inside the processing chamber 3 comprises a step of cooling the mixture to a temperature of between -15°C and 0°C (more preferably between - 15°C and -5°C, still more preferably between -12°C and -7°C).

It should be noted that in this way, according to the ranges of temperature previously indicated, an ice cream type product of excellent quality is made.

According to yet another aspect, the step of activating the thermal treatment system in heating mode comprises a step of heating the basic mixture to a heating temperature of between 60°C and 85°C. Preferably, the heating temperature is between 70°C and 85°C.

Still more preferably, the heating temperature is between 70°C and 80°C.

According to another aspect, the heating temperature is preferably greater than 75°C (and preferably less than 100°C).

It should be noted, more generally, that the temperature is selected so as to allow the elimination of the Listeria monocytogenes bacteria.

The method comprises, between the above-mentioned step of activating the thermal treatment system in heating mode and the above-mentioned step of activating the thermal treatment system in cooling mode, a further step of activating the thermal system in cooling mode for a predetermined holding time to keep the basic mixture at a temperature of between 2°C and 6°C for the predetermined holding time.

It should be noted that this further step basically has the aim of allowing the pasteurized mixture to be preserved safely before mixing and cooling.

It should be noted that, advantageously, the method according to the invention allows increasing food safety and reducing the potential sources of contact with the product being processed.

In effect, starting from the moment in which the basic mixture is placed in the processing chamber 3, the (semi-finished) product is kept inside the processing chamber 3 until it is extracted; after mixing and cooling the basic mixture, the finished product is extracted directly from the machine.

Thus, during the entire process, the (semi-finished) product does not come into contact with further elements or accessories (nor is it handled by the operator) and remains confined in the processing chamber 3 which constitutes a sealed and safe environment in terms of food safety.

In this way, there is no need to handle the basic mixture, which is kept inside the hygienically safe environment of the processing chamber 3.

Thus, food risks are reduced considerably.

It should also be noted that, according to the method, it is possible to make a product of the ice cream type using a single machine 1: in effect, both pasteurizing and mixing and cooling are performed in the machine 1, inside the same container 3.

It should therefore be noted that the method, according to the invention, increases the food safety of the product, by reducing possible contamination during processing.

In this way, advantageously, the machine 1 may be particularly compact, and the method for making ice cream can be advantageously implemented even in facilities with a small amount of floor space.

The thermal treatment system is a system operating according to a thermodynamic cycle and comprises a circulation circuit provided with an operating fluid (heat exchanger fluid).

According to another aspect, the thermal treatment system comprises a single compressor.

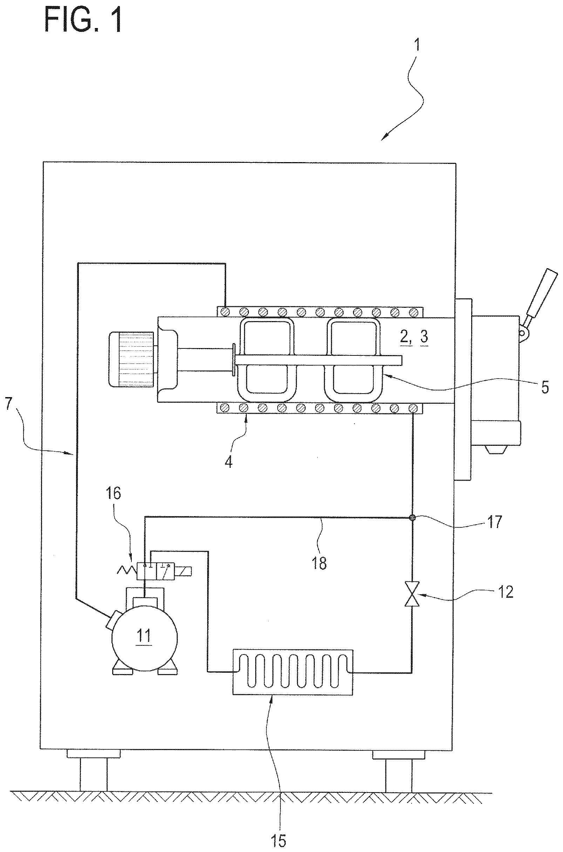

With reference to the embodiment of Figure 1, the thermal treatment system is configured to perform, when activated in heating mode, a hot gas thermal cycle.

The thermal treatment system of Figure 1 is described in more detail below.

The fluid circulation circuit 7 comprises a compressor 11, a first heat exchanger 4, a second heat exchanger 15, and a throttling valve 12, operating according to a thermodynamic cycle. More precisely, the second heat exchanger 15 leads to the delivery end of the compressor 11 and is connected to the first heat exchanger 8 through the throttling valve 12.

The first heat exchanger 4 is associated with the processing chamber 3.

More specifically, the first heat exchanger 4 is defined by a coil wound around the side walls of the respective processing chamber 3 to exchange heat with the product contained therein.

The fluid circulation circuit 7 further comprises a switching valve 16 which is located downstream of the delivery end of the compressor 11 and whose output is connected both to the second heat exchanger 15, at a first switching position of it, and to a node 17 interposed between the throttling valve 12 and the first heat exchanger 8, at a second switching position of it.

The connection between the switching valve 16 and the node 17 is made by a by-pass branch 18.

The switching valve 16 can be controlled by the operator for changing the configuration of the circuit 7.

Operatively, if the switching valve 16 is in its first position, where the by-pass branch 18 is closed and the connection between the compressor 11 and the second heat exchanger 15 is open, the operating mode of the single fluid circulation circuit 7 is the one whereby the first heat exchanger 4 acts as an evaporator and the second heat exchanger 15 acts as a condenser.

Thus, the product in the tank 3 is cooled: the step of activating the thermal treatment system in cooling mode for cooling the basic mixture previously subjected to the thermal treatment (pasteurization) inside the processing chamber 3 is activated and, at the same time, the rotation of the rotary stirrer 5 is activated, so as to allow incorporating air in the basic mixture to make an ice cream type product in the processing chamber 3.

On the other hand, if the switching valve 16 is in its second position, where the by-pass branch 18 is open and the connection between the compressor 11 and the second heat exchanger 15 is closed, the operating mode of the single fluid circulation circuit 7 is the one whereby the throttling valve 12 and the second heat exchanger 15 are cut off from fluid circulation, while the first heat exchanger 8 has fluid flowing through it and transfers heat to the respective tank 3, thereby heating the product contained therein.

In this case, the fluid circulating in the circuit 7 is heated at the compressor 11, where heat is generated by the very effect of its operation (heat generated by friction between the parts of the compressor 11 and by the Joule effect in the electric motor of the compressor 11 itself) and transfers heat to the product in the tank 3 associated with the first heat exchanger 8 which has fluid flowing through it.

The basic mixture in the container 3 is heated: thus, the thermal treatment system is activated in heating mode for a predetermined time for heating the basic mixture inside the processing chamber 3, so as to subject the basic mixture to a thermal treatment (pasteurization) inside the processing chamber 3.

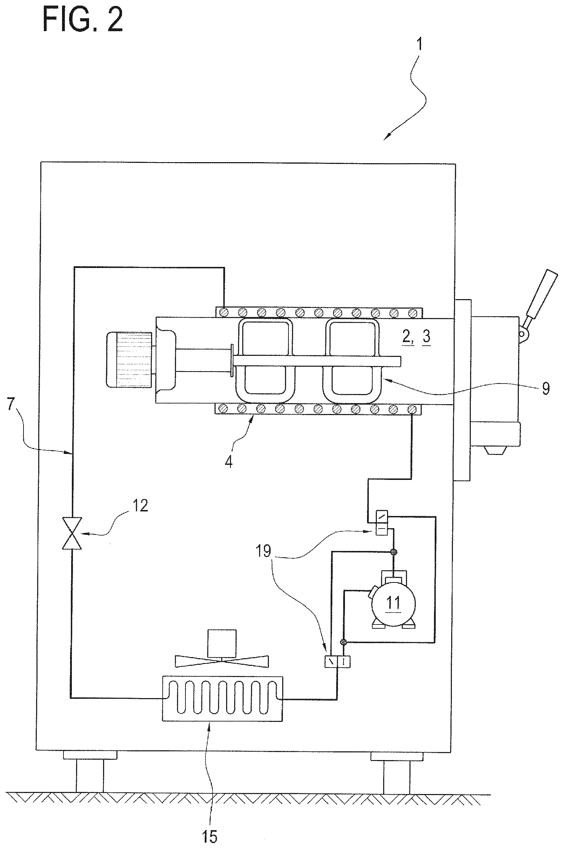

With reference to Figure 2, the circuit 7 for circulation of the operating fluid comprises a compressor 11, a first heat exchanger 4, a second heat exchanger 15, and a throttling valve 12, operating according to a thermodynamic cycle, and the fluid circulation circuit 7 further comprises a valve 19 for inverting the thermodynamic cycle and adjustable between a first configuration, in which the first heat exchanger 4 acts as an evaporator and the second heat exchanger 15 acts as a condenser, and a second configuration, in which the first heat exchanger 4 acts as a condenser and the second heat exchanger 15 acts as an evaporator, and where the step of activating the thermal treatment system in cooling mode comprises a step of setting the valve 19 for inverting the thermodynamic cycle to the first configuration and the step of activating the thermal treatment system in heating mode comprises a step of setting the valve 19 for inverting the thermodynamic cycle to the second configuration.

In other words, the operating fluid circulating circuit 7 can operate, in cooling mode (cooling of the heat exchanger 4) or heat pump mode (heating of the heat exchanger 4) depending on the step to be performed.

It should be noted that - both in the embodiment of Figure 1 and in the embodiment of Figure 2 - advantageously, there is a single thermal treatment system, which considerably simplifies the machine 1.

It should be noted that according to one aspect, the cycle is preferably never interrupted, that is to say, it is carried out without breaks and follows all the steps described above (in particular between the step of activating the thermal treatment system in heating mode and the step of activating the thermal treatment system in cooling mode).

Furthermore, according to another aspect, if other ingredients are added during the step of thermally treating the basic mixture, the step of activating the thermal treatment system in heating mode to heat the mixture inside the processing chamber 3 for a predetermined time is started again (restarted or started over) in such a way as to subject the basic mixture (including the added ingredients) inside the processing chamber 3 to a thermal treatment such as to deactivate any infectious agents it might contain.

Preferably, the machine is equipped with a sensor (not illustrated) adapted to detect the feeding of the ingredients into the processing chamber 3.

Preferably, the sensor is associated with a loading hopper for feeding the processing chamber 3.

According this aspect, the method comprises a step of detecting, by means of a sensor, the feeding of the basic ingredients into the processing chamber 3.

It should be noted that the method also comprises a step, consequent upon detecting the feeding of the basic ingredients into the processing chamber 3, of activating the thermal treatment system in heating mode for a predetermined length of time to heat the basic mixture inside the processing chamber 3, so as to subject the basic mixture (including the basic ingredients added) .inside the processing chamber 3 to a thermal treatment such as to deactivate any infectious agents it might contain.

## Claims

1. A method for making ice cream, comprising a step of preparing a machine (1) for mixing and cooling ice cream and equipped with:
- a processing container (2) defining a processing chamber (3) and provided with a stirrer (5) rotating inside the processing chamber (3);
- a thermal treatment system, configured to be activated, selectively and alternatively, in heating or cooling mode, for heating and cooling the processing chamber (3), respectively;
the method being **characterised in that** it also comprises the following steps:
- placing a basic ice cream mixture inside the processing chamber (3);
- activating the thermal treatment system in heating mode for a predetermined time for heating the basic mixture inside the processing chamber (3), in such a way as to subject the basic mixture to a pasteurizing thermal treatment inside the processing chamber (3) such as to deactivate any infectious agents which may be present;
- activating the thermal treatment system in cooling mode for cooling the basic mixture previously subjected to the pasteurizing thermal treatment inside the processing chamber (3) and, at the same time, rotating the rotary mixer (5), so as to allow incorporating air into the basic mixture to make an ice cream type product in the processing chamber (3);
- keeping the basic mixture previously subjected to the thermal treatment inside the processing chamber (3) between the step of activating the thermal treatment system in heating mode for a predetermined time and the step of activating the thermal treatment system in cooling mode;
- extracting at least one portion of the ice cream type product from the processing chamber (3);
wherein the thermal treatment system is a system operating according to a thermodynamic cycle and comprises a circulation circuit (7) provided with an operating fluid;
wherein the method comprises, between the step of activating the thermal treatment system in heating mode and the step of activating the thermal treatment system in cooling mode, a further step of activating the thermal system in cooling mode for a predetermined holding time to keep the basic mixture at a temperature of between 2°C and 6°C for the predetermined holding time;
wherein the circuit (7) for circulation of the operating fluid comprises a compressor (11), a first heat exchanger 4, a second heat exchanger (15), and a throttling valve (12), operating according to a thermodynamic cycle, and wherein the fluid circulation circuit (7) further comprises a valve (19) for inverting the thermodynamic cycle and adjustable between a first configuration, in which the first heat exchanger (4) acts as an evaporator and the second heat exchanger (15) acts as a condenser, and a second configuration, in which the first heat exchanger (4) acts as a condenser and the second heat exchanger (15) acts as an evaporator, and wherein the step of activating the thermal treatment system in cooling mode comprises a step of setting the valve (19) for inverting the thermodynamic cycle to the first configuration and the step of activating the thermal treatment system in heating mode comprises a step of setting the valve (19) for inverting the thermodynamic cycle to the second configuration.

2. The method according to the preceding claim, wherein the step of activating the thermal treatment system in cooling mode for cooling the basic mixture inside the processing chamber (3) comprises a step of cooling the mixture to a temperature of between -15°C and 0°C.

3. The method according to the preceding claim, wherein the step of activating the thermal treatment system in cooling mode for cooling the basic mixture inside the processing chamber (3) comprises a step of cooling the mixture to a temperature of between -15°C and -5°C.

4. The method according to any one of claims 1 to 3, wherein the step of activating the thermal treatment system in heating mode comprises a step of heating the basic mixture to a temperature of between 60°C and 85°C.

5. The method according to the preceding claim, wherein the holding time is greater than 2 hours.

6. The method according to any of the preceding claims, wherein the thermal treatment system comprises a single compressor.

7. The method according to any of the preceding claims, wherein the thermal treatment system is configured to perform, when activated in heating mode, a hot gas thermal cycle.

8. The method according to any one of the preceding claims, comprising the following steps:
- preparing a sensor for detecting the feeding of the basic ingredients into the processing chamber (3);
- detecting, by means of the sensor, the feeding of the basic ingredients into the processing chamber (3);
- consequent upon detecting the feeding of the basic ingredients into the processing chamber (3), activating the thermal treatment system in heating mode for a predetermined length of time to heat the basic mixture inside the processing chamber (3), so as to subject the basic mixture, including the basic ingredients added, inside the processing chamber (3) to a thermal treatment such as to deactivate any infectious agents it might contain

## Patentansprüche

1. Verfahren zur Herstellung von Speiseeis, umfassend einen Schritt des Vorbereitens einer Maschine (1) zum Mischen und Kühlen von Speiseeis und ausgestattet mit:
- einem Prozessbehälter (2), der eine Prozesskammer (3) definiert und mit einem Rührwerk (5) versehen ist, das sich innerhalb der Prozesskammer (3) dreht;
- einem Wärmebehandlungssystem, das so konfiguriert ist, dass es selektiv und alternativ im Heiz- oder Kühlbetrieb aktiviert wird, um die Prozesskammer (3) zu heizen bzw. zu kühlen;
wobei das Verfahren **dadurch gekennzeichnet ist, dass** es auch die folgenden Schritte umfasst:
- Geben einer basischen Speiseeismischung in die Prozesskammer (3);
- Aktivieren des Wärmebehandlungssystems im Heizbetrieb für eine vorbestimmte Zeit zum Heizen der Grundmischung innerhalb der Prozesskammer (3), so dass die Grundmischung einer pasteurisierenden Wärmebehandlung innerhalb der Prozesskammer (3) unterzogen wird, um eventuell vorhandene Infektionserreger zu deaktivieren;
- Aktivieren des Wärmebehandlungssystems im Kühlbetrieb zur Kühlung der zuvor der Pasteurisierung unterzogenen Grundmischung innerhalb der Prozesskammer (3) und gleichzeitiges Drehen des Rotationsmischers (5), um das Einbringen von Luft in die Grundmischung zur Herstellung eines speiseeisartigen Produkts in der Prozesskammer (3) zu ermöglichen;
- Behalten der zuvor der Wärmebehandlung unterzogenen Grundmischung innerhalb der Prozesskammer (3) zwischen dem Schritt des Aktivierens des Wärmebehandlungssystems im Heizbetrieb für eine vorbestimmte Zeit und dem Schritt des Aktivierens des Wärmebehandlungssystems im Kühlbetrieb;
- Entnehmen mindestens eines Abschnitts des speiseeisartigen Produkts aus der Prozesskammer (3); wobei das Wärmebehandlungssystem ein System ist, das nach einem thermodynamischen Zyklus arbeitet und einen Zirkulationskreislauf (7) umfasst, der mit einem Betriebsfluids versehen ist;
wobei das Verfahren zwischen dem Schritt des Aktivierens des Wärmebehandlungssystems im Heizbetrieb und dem Schritt des Aktivierens des Wärmebehandlungssystems im Kühlbetrieb einen weiteren Schritt des Aktivierens des Wärmebehandlungssystems im Kühlbetrieb für eine vorbestimmte Haltezeit umfasst, um die Grundmischung bei einer Temperatur zwischen 2 °C und 6 °C für die vorbestimmte Haltezeit zu behalten;
wobei der Kreislauf (7) zur Zirkulation des Betriebsfluids einen Kompressor (11), einen ersten Wärmetauscher 4, einen zweiten Wärmetauscher (15) und ein Drosselventil (12) umfasst, die nach einem thermodynamischen Zyklus arbeiten, und wobei der Fluidzirkulationskreislauf (7) ferner ein Ventil (19) zum Invertieren des thermodynamischen Zyklus umfasst und zwischen einer ersten Konfiguration einstellbar ist, in der der erste Wärmetauscher (4) als Verdampfer und der zweite Wärmetauscher (15) als Kondensator wirkt, und einer zweiten Konfiguration, in der der erste Wärmetauscher (4) als Kondensator und der zweite Wärmetauscher (15) als Verdampfer wirkt, und wobei der Schritt des Aktivierens des Wärmebehandlungssystems im Kühlbetrieb einen Schritt des Einstellens des Ventils (19) zum Invertieren des thermodynamischen Zyklus auf die erste Konfiguration umfasst und der Schritt des Aktivierens des Wärmebehandlungssystems im Heizbetrieb einen Schritt des Einstellens des Ventils (19) zum Invertieren des thermodynamischen Zyklus auf die zweite Konfiguration umfasst.

2. Verfahren nach dem vorhergehenden Anspruch, wobei der Schritt des Aktivierens des Wärmebehandlungssystems im Kühlbetrieb zum Kühlen der Grundmischung innerhalb der Prozesskammer (3) einen Schritt des Kühlens der Mischung auf eine Temperatur zwischen -15 °C und 0 °C umfasst.

3. Verfahren nach dem vorhergehenden Anspruch, wobei der Schritt des Aktivierens des Wärmebehandlungssystems im Kühlbetrieb zum Kühlen der Grundmischung innerhalb der Prozesskammer (3) einen Schritt des Kühlens der Mischung auf eine Temperatur zwischen -15 °C und -5 °C umfasst.

4. Verfahren nach einem der Ansprüche 1 bis 3, wobei der Schritt des Aktivierens des Wärmebehandlungssystems im Heizbetrieb einen Schritt des Erhitzens der Grundmischung auf eine Temperatur zwischen 60 °C und 85 °C umfasst.

5. Verfahren nach dem vorhergehenden Anspruch, wobei die Haltezeit größer als 2 Stunden ist.

6. Verfahren nach einem der vorhergehenden Ansprüche, wobei das Wärmebehandlungssystem einen einzigen Kompressor umfasst.

7. Verfahren nach einem der vorhergehenden Ansprüche, wobei das Wärmebehandlungssystem so konfiguriert ist, dass es bei Aktivierung im Heizbetrieb einen Heißgas-Thermokreislauf durchführt.

8. Verfahren nach einem der vorhergehenden Ansprüche, umfassend die Schritte von:
- Vorbereiten eines Sensors zur Erfassung der Zuführung der Grundzutaten in die Prozesskammer (3);
- Erfassen der Zuführung der Grundzutaten in die Prozesskammer (3) mittels des Sensors;
- nach Erfassung der Zuführung der Grundzutaten in die Prozesskammer (3), Aktivieren des Wärmebehandlungssystems im Heizbetrieb für eine vorbestimmte Zeitdauer, um die Grundmischung innerhalb der Prozesskammer (3) zu erhitzen, um die Grundmischung einschließlich der zugesetzten Grundzutaten innerhalb der Prozesskammer (3) einer Wärmebehandlung zu unterziehen, um etwaige darin enthaltene Infektionserreger zu deaktivieren.

## Revendications

1. Procéder pour confectionner une crème glacée, comprenant une étape consistant à préparer une machine (1) servant à mélanger et à refroidir une crème glacée et équipée :
- d'un récipient de traitement (2) définissant une chambre de traitement (3) et pourvu d'un agitateur (5) tournant à l'intérieur de la chambre de traitement (3) ;
- un système de traitement thermique configuré pour être activé, sélectivement et alternativement, en mode chauffage ou refroidissement pour, respectivement, chauffer ou refroidir la chambre de traitement (3) ;
le procédé étant **caractérisé en ce qu'**il comprend aussi les étapes suivantes :
- placer un mélange de base de crème glacée à l'intérieur de la chambre de traitement (3);
- activer le système de traitement thermique en mode chauffage pendant une période de temps prédéterminée pour chauffer le mélange de base à l'intérieur de la chambre de traitement (3) de manière à soumettre le mélange de base à un traitement thermique de pasteurisation à l'intérieur de la chambre de traitement (3) de sorte à inactiver tout agent infectieux pouvant être présent;
- activer le système de traitement thermique en mode refroidissement pour refroidir le mélange de base soumis préalablement au traitement thermique de pasteurisation à l'intérieur de la chambre de traitement (3) et, en même temps, faire tourner le mélangeur rotatif (5) de sorte à permettre l'introduction d'air dans le mélange de base pour confectionner un produit de type crème glacée dans la chambre de traitement (3) ;
- conserver le mélange de base préalablement soumis au traitement thermique à l'intérieur de la chambre de traitement (3) entre l'étape d'activation du système de traitement thermique en mode chauffage pendant une période de temps prédéterminée et l'étape d'activation du système de traitement thermique en mode refroidissement;
- extraire au moins une portion du produit de type crème glacée de la chambre de traitement (3) ;
dans lequel le système de traitement thermique est un système fonctionnant selon un cycle thermodynamique et qui comprend un circuit à circulation (7) pourvu d'un fluide de service ;
dans lequel le procédé comprend, entre l'étape d'activation du système de traitement thermique en mode chauffage et l'étape d'activation du système de traitement thermique en mode refroidissement, une étape supplémentaire d'activation du système thermique en mode refroidissement pendant une durée de chambrage prédéterminée pour maintenir le mélange de base à une température comprise entre 2 et 6 °C pendant la durée de chambrage prédéterminée;
dans lequel le circuit (7) à circulation du fluide de service comprend un compresseur (11), un premier échangeur de chaleur (4), un second échangeur de chaleur (15) et une vanne d'étranglement (12), fonctionnant selon un cycle thermodynamique, et dans lequel le circuit à circulation de fluide (7) comprend de plus une vanne (19) servant à inverser le cycle thermodynamique et pouvant être réglée entre une première configuration, dans laquelle le premier échangeur de chaleur (4) agit comme un évaporateur et le second échangeur de chaleur (15) agit comme un condensateur, et une seconde configuration, dans laquelle le premier échangeur de chaleur (4) agit comme un condensateur et le second échangeur de chaleur (15) agit comme un évaporateur, et dans lequel l'étape d'activation du système de traitement thermique en mode refroidissement comprend une étape de réglage de la vanne (19) pour inverser le cycle thermodynamique à la première configuration et l'étape d'activation du système de traitement thermique en mode chauffage comprend une étape de réglage de la vanne (19) pour inverser le cycle thermodynamique à la seconde configuration.

2. Procédé selon la revendication précédente, dans lequel l'étape d'activation du système de traitement thermique en mode refroidissement pour refroidir le mélange de base à l'intérieur de la chambre de traitement (3) comprend une étape de refroidissement du mélange à une température comprise entre -15 et 0 °C.

3. Procédé selon la revendication précédente, dans lequel l'étape d'activation du système de traitement thermique en mode refroidissement pour refroidir le mélange de base à l'intérieur de la chambre de traitement (3) comprend une étape de refroidissement du mélange à une température comprise entre -15 et -5 °C.

4. Procédé selon l'une quelconque des revendications de 1 à 3, dans lequel l'étape d'activation du système de traitement thermique en mode chauffage comprend une étape de chauffage du mélange de base à une température comprise entre 60 et 85 °C.

5. Procédé selon la revendication précédente, dans lequel la durée de chambrage est supérieure à 2 heures.

6. Procédé selon l'une quelconque des revendications précédentes, dans lequel le système de traitement thermique comprend un seul compresseur.

7. Procédé selon l'une quelconque des revendications précédentes, dans lequel le système de traitement thermique est configuré pour effectuer, lorsqu'il est activé en mode chauffage, un cycle thermique par gaz chauds.

8. Procédé selon l'une quelconque des revendications précédentes, comprenant les étapes suivantes :
- préparer un capteur pour détecter l'alimentation des ingrédients de base dans la chambre de traitement (3) ;
- détecter, au moyen du capteur, l'alimentation des ingrédients de base dans la chambre de traitement (3) ;
- suite à la détection de l'alimentation des ingrédients de base dans la chambre de traitement (3), activer le système de traitement thermique en mode chauffage pendant une période de temps prédéterminée pour chauffer le mélange de base à l'intérieur de la chambre de traitement (3) de manière à soumettre le mélange de base, y compris les ingrédients de base ajoutés, à l'intérieur de la chambre de traitement (3) à un traitement thermique de sorte à inactiver tout agent infectieux qu'il peut contenir.
